# EUROPÄISCHE PATENTSCHRIFT

(11) **EP 2 219 919 B1**
(45) Veröffentlichungstag und Bekanntmachung des Hinweises auf die Patenterteilung: **30.11.2011**
(21) Anmeldenummer: 08870104.0
(22) Anmeldetag: 02.12.2008
(51) Int. Cl.: B60W 10/02, B60W 20/00, B60K 6/387, B60K 6/48

(54) **VERFAHREN UND VORRICHTUNG ZUR STEUERUNG EINES KRIECHBETRIEBES EINES FAHRZEUGS MIT EINEM HYBRIDANTRIEB**
METHOD AND DEVICE FOR CONTROLLING A CREEP OPERATION OF A VEHICLE WITH A HYBRID DRIVE
PROCÉDÉ ET DISPOSITIF POUR COMMANDER UN MODE DE MARCHE EXTRA-LENTE D'UN VÉHICULE À ENTRAÎNEMENT HYBRIDE

(30) Priorität: 17.12.2007 DE 102007055825
(43) Veröffentlichungstag der Anmeldung: 25.08.2010
(73) Patentinhaber: ZF Friedrichshafen AG, 88038 Friedrichshafen (DE)
(72) Erfinder: KALTENBACH, Johannes, 88048 Friedrichshafen (DE); WALLNER, Stefan, A-5163 Mattsee (AT)
(86) Internationale Anmeldenummer: PCT/EP2008/066572
(87) Internationale Veröffentlichungsnummer: WO 2009/086995

(56) Entgegenhaltungen:
- EP-A- 1 862 364
- DE-A1- 10 158 536

## Beschreibung

Die Erfindung betrifft ein Verfahren zur Steuerung eines Kriechbetriebs eines Fahrzeuges mit einem Hybridantrieb gemäß dem Oberbegriff des Patentanspruchs 1.

Hybridabtriebe gewinnen im Fahrzeugbau aufgrund ihres Potenzials zur Verringerung von Schadstoffemissionen und Energieverbrauch zunehmend an Bedeutung. Derartige Fahrzeuge weisen verschiedenartige Antriebsquellen auf, wobei insbesondere Kombinationen von Verbrennungs- und Elektromotoren von Vorteil sind, da sie einerseits die Reichweiten- und Leistungsvorteile von Brennkraftmaschinen und andererseits die flexiblen Einsatzmöglichkeiten der elektrischen Maschinen als alleinige oder Hilfsantriebsquelle oder als Startergenerator sowie als Generator zur Stromerzeugung und Rekuperation nutzen können.

Vom Markt werden Hybrid-Antriebsstränge gefordert, die möglichst ohne zusätzlichen Bauraumbedarf, bei möglichst geringer Kompliziertheit und bei geringem Kosten- und Konstruktionsaufwand in Fahrzeuge implementiert werden können. Dabei werden grundsätzlich zwei Hybrid-Topologien, der Serienhybrid und der Parallelhybrid unterschieden. Solche Anordnungen sind bereits bekannt und werden ständig weiterentwickelt.

Beim Serienhybrid sind die Antriebsmaschinen hintereinander geschaltet. Dabei dient der Verbrennungsmotor, beispielsweise ein Dieselmotor, als Antrieb für einen Generator, der eine elektrische Maschine speist. Das Fahrzeug wird somit ausschließlich durch die Elektromaschine angetrieben. Der Verbrennungsmotor ist hingegen von den Antriebsrädern entkoppelt und kann daher ständig in einem einzigen Betriebspunkt, also bei einem bestimmten Drehmoment und konstanter Drehzahl betrieben werden. Dieses Antriebskonzept eignet sich beispielsweise für Busse im städtischen Kurzstreckenverkehr, wobei vorzugsweise ein Betriebspunkt, bei dem der Wirkungsgrad des Verbrennungsmotors möglichst hoch ist und gleichzeitig Schadstoffemissionen, Kraftstoffverbrauch und Geräuschentwicklung in einem günstige Bereich liegen, eingestellt wird. Ungünstig wirkt sich beim Serienhybrid dagegen aus, dass der Wirkungsgrad des Antriebs aufgrund der mechanisch-elektrischen Mehrfachumwandlung eingeschränkt ist.

Demgegenüber bieten Parallelhybrid-Antriebstränge durch eine bezüglich des Kraftflusses parallele Anordnung der Triebstrangaggregate neben der Überlagerung der Antriebsmomente die Möglichkeit der Ansteuerung mit rein verbrennungsmotorischem Antrieb oder rein elektromotorischem Antrieb. Funktionell kann beim Parallelhybrid der Verbrennungsmotor durch jeweiliges Belasten bzw. Unterstützen mittels einer oder mehrerer elektrischer Maschinen weitgehend bei optimalem Drehmoment betrieben werden, so dass der maximale Wirkungsgrad des Verbrennungsmotors effektiv genutzt werden kann. Durch die elektrische Unterstützung des Verbrennungsmotors verringert sich im Mittel der Kraftstoffverbrauch. Da bei kurzzeitigen erhöhten Leistungsanforderungen im sogenannten Boostbetrieb, beispielsweise bei Überholvorgängen, eine Summierung der Antriebsleistung möglich ist, kann der Verbrennungsmotor nahezu ohne Einbußen an Leistung und Fahrkomfort des Fahrzeuges vergleichsweise kleiner, und gewichts- und bauraumsparender ausgelegt werden, welches sich zusätzlich emissionsverringemd und kostengünstig auswirkt. Die Elektromaschine kann zudem als integrierter Startergenerator (ISG) zum Start des Verbrennungsmotors über eine Kupplung fungieren. Weiterhin kann die elektrische Maschine im generatorischen Betrieb zum Laden eines elektrischen Energiespeichers dienen und zur Rekuperation im Bremsbetrieb eingesetzt werden. Als Getriebe zur Variation von Übersetzungen des Antriebes kommen grundsätzlich alle Formen von Fahrzeuggetrieben in Betracht.

Bei einem Parallelhybrid-Antrieb kann im praktischen Fahrbetrieb, abhängig von einer jeweiligen Hybrid-Betriebsstrategie, die Antriebsform des Fahrzeuges zwischen verbrennungsmotorischem Antrieb, elektromotorischem Antrieb und gemischtem Antrieb häufig wechseln. Die wechselnde Anbindung der Elektromaschine und des Verbrennungsmotors wird meist über Kupplungen realisiert. Dabei werden Zwei-Kupplungsanordnungen (2K) und Ein-Kupplungsanordnungen (1K) unterschieden, wobei bei beiden Konzepten die Elektromaschine als integrierter Startergenerator (2K-ISG bzw. 1 K-ISG - Anordnung) fungieren kann. Bei einem 2K-ISG - Antriebsstrang, wie beispielsweise aus der US 2005 022 1947 A1 bekannt, ist der Verbrennungsmotor über eine erste Kupplung mit der Elektromaschine verbindbar. Die Elektromaschine wiederum ist über eine separate zweite Kupplung mit einem Fahrzeuggetriebe koppelbar. Bei einem 1K-ISG - Antriebsstrang, wie er beispielsweise aus der DE 10 2005 051 382 A1 bekannt ist, entfällt hingegen eine zweite separate Kupplung zwischen der Elektromaschine und dem Getriebe bzw. dem Abtrieb. Die Elektromaschine kann dann direkt mit dem Getriebe verbunden sein. Die Funktion einer optionalen zweiten Kupplung zwischen der Elektromaschine und dem Abtrieb kann, soweit dies bei dem jeweiligen Antriebskonzept vorgesehen beziehungsweise erforderlich ist, auch von gegebenenfalls vorhandenen getriebeinternen Schaltkupplungen und/oder Schaltbremsen, wie sie beispielsweise in Getriebeautomaten verbaut sind oder von einer dem Getriebe vorgeschalteten Wandlerüberbrückungskupplung übernommen werden.

Weiterhin ist es bekannt, bei Kraftfahrzeugen mit automatisierten Getrieben oder Automatgetrieben zur Erhöhung des Fahrkomforts und der Betriebssicherheit in dessen Steuerung und Regelung einen Kriechmodus zu implementieren. Dabei wird vom Antrieb an den Abtrieb beziehungsweise an die angetriebenen Fahrzeugräder ein Kriechmoment übertragen, welches auf einen vorgegebenen Kennwert oder eine Kennlinie einstellbar sein kann. In einem solchen Betriebszustand bewegt sich das Fahrzeug bei einer eingelegten Getriebeübersetzung, nicht betätigter Bremse und nicht betätigtem Fahrpedal mit sehr geringer Geschwindigkeit. An Steigungen ist mittels eines Kriechmodus auch die Realisierung einer zeitlich begrenzten Haltefunktion möglich.

Ein Kriechmodus ist je nach Antriebskonzept auf verschiedene Weise in den Antriebsstrang implementierbar und regelbar. Bei herkömmlichen Fahrzeugen mit einem automatisierten Schaltgetriebe und einer automatischen reibschlüssigen Anfahrkupplung kann die Realisierung des Kriechmodus durch eine entsprechende Ansteuerung der Anfahrkupplung erfolgen. Bei anderen herkömmlichen Fahrzeugen mit Automatgetrieben und einem hydrodynamischen Drehmomentwandler ist ein über den Drehmomentwandler erzeugtes Kriechmoment im Wesentlichen durch die Leerlaufdrehzahl des Verbrennungsmotors bestimmt. Bei Hybrid- oder Elektrofahrzeugen kann als Alternative zu herkömmlichen Reibkupplungen oder zu hydrodynamischen Drehmomentwandlern eine vorhandene elektrische Antriebseinrichtung auch zur Erzeugung eines Kriechmodus eingesetzt werden.

Ein derartiger elektrischer Kriechbetrieb hat gegenüber Antriebssträngen mit einer Reibkupplung, die zur Übertragung eines Kriechmomentes im Schlupf betrieben wird, grundsätzlich den Vorteil, dass geringere mechanische Verluste bei der Kraftübertragung entstehen. Zudem entfällt die Gefahr einer Kupplungsüberhitzung. Daher scheint bei einem Hybridfahrzeug ein rein elektrisches Kriechen mittels der elektrischen Maschine bei im Leerlauf laufendem, vom Antriebsstrang abgekoppeltem Verbrennungsmotor naheliegend zu sein.

Dabei stellt sich jedoch als problematisch heraus, dass der elektrische Antriebsenergiespeicher des Hybridfahrzeuges sich bei dem motorischen Betrieb der Elektromaschine in relativ kurzer Zeit soweit entleeren kann, dass der Kriechbetrieb abgebrochen oder unterbrochen werden muss, um den Energiespeicher im Generatormodus der Elektromaschine zu laden. Temporär stünde die Elektromaschine dann nicht zum Antrieb des Fahrzeuges und gegebenenfalls zur Versorgung weiterer Verbraucher zur Verfügung. Ein elektromotorisches Dauerkriechen ist daher bei einem Hybridfahrzeug als nicht optimal zu beurteilen. Andererseits können bei einem Dauerkriechen über eine schlupfende Kupplung hohe Verlustleistungen an dieser entstehen, die eine entsprechende Baugröße mit einem erhöhtem Bauraumbedarf und zusätzlichem Gewicht sowie relativ aufwendige Kühlmaßnahmen erfordern.

Aus der DE 101 58 536 B4 ist ein Antrieb für ein Elektro- oder Hybridfahrzeug bekannt, bei dem ein Kriechbetrieb mittels eines elektrischen Antriebsaggregats realisiert wird. Im Antriebsstrang des Fahrzeuges ist zwischen der Elektromaschine und einem Abtrieb eine Kupplungseinrichtung angeordnet. Die Kupplungseinrichtung kann beispielsweise eine als Reibkupplung ausgebildete Wandlerüberbrückungskupplung sein, die einem Automatgetriebe antriebstechnisch vorgeschaltet ist. Alternativ dazu können auch eine oder mehrere Schaltkupplungen und/oder Schaltbremsen eines Automatgetriebes als die besagte Kupplungseinrichtung fungieren. Um die thermische Belastung der Elektromaschine im Kriechmodus bei hohen Momentanforderungen, beispielsweise beim Kriechen oder Halten des Fahrzeuges an Steigungen oder beim Überfahren von Bordsteinkanten, zu verringern und gleichzeitig eine größere Dimensionierung der elektrischen Maschine und/oder der Kupplungseinrichtung zu vermeiden, kann bei Bedarf parallel zum motorischen Betrieb der Elektromaschine eine Kupplung der Kupplungseinrichtung im Schlupf betrieben werden. Sind der abtriebsseitigen Kupplungseinrichtung mehrere Kupplungen zugehörig, so können diese auch abwechselnd oder additiv im Schlupf betrieben werden. Weist die elektrische Maschine zwei separat erregbare Wicklungen auf, so können diese im ständigen Wechsel betrieben werden. Durch eine Kombination dieser Mittel beziehungsweise Maßnahmen wird eine thermische Überlastung sowohl der Kupplungseinrichtung als auch der elektrischen Maschine bei hohen Antriebsmomenten bei sehr geringen Geschwindigkeiten oder bei einem hohem Dauerstillstandmoment vermieden.

Nachteilig daran ist, dass die Elektromaschine bei einem Dauerkriechen für einen relativ langen Zeitraum kontinuierlich motorisch betrieben wird. Zwar kann die Elektromaschine durch die getriebeseitige Kupplungseinrichtung und/oder durch die im Wechsel ansteuerbaren mehreren erregbaren Wicklungen unterstützt werden. Die relativ intensive Beanspruchung des elektrischen Antriebsenergiespeichers der elektrischen Maschine kann dennoch einen derartigen Dauerkriechbetrieb signifikant einschränken. Eine Elektromaschine mit mehreren separaten Wicklungen kann außerdem relativ kostenintensiv in der Herstellung sein. Zudem ist der komplette Verzicht auf den Betrieb des Verbrennungsmotors beim Dauerkriechen bei einem Hybridantrieb eher ineffektiv.

Die EP 1 862 364 A beschreibt ein Verfahren zur Steuerung eines Kriechbetriebes eines Fahrzeuges mit einem Hybridantrieb, mit einem Parallelhybrid-Antriebsstrang, umfassend einen Verbrennungsmotor, wenigstens eine Elektromaschine, ein zwischen dem Verbrennungsmotor und der Elektromaschine angeordnetes, als Reibelement ausgebildetes, erstes Schaltelement, ein Getriebe, einen Abtrieb und ein zwischen der Elektromaschine und dem Abtrieb angeordnetes, als Reibelement ausgebildetes zweites Schaltelement.

Unter einem Kriechbetrieb eines Fahrzeuges mit einem Verbrennungsmotor und einem Übersetzungsgetriebe wird verstanden, dass sich das Fahrzeug bei einer eingelegten Übersetzung und nicht betätigtem Fahrpedal mit einer so geringen Fahrgeschwindigkeit fortbewegt oder temporär gehalten wird, dass eine kraftschlüssige Verbindung zwischen dem Verbrennungsmotor und einem Abtrieb mit einem Drehzahlabfall des Verbrennungsmotors unterhalb einer Leerlaufdrehzahl einhergehen würde.

Unter einem Reibelement wird ein kraftübertragendes reibschlüssiges Schaltelement mit wenigstens zwei Reibpartnern verstanden, wobei bei vollständig eingerücktem Schaltelement Reibschluss hergestellt ist und im Schlupf eine Drehzahldifferenz zwischen dem primärseitigen und dem sekundärseitigen Reibpartner vorhanden ist, wobei Reibenergie in Wärme umgewandelt wird.

Die EP 1 862 364 A gibt weiter an, dass zur Realisierung des Kriechbetriebes bei laufendem Verbrennungsmotor beide Schaltelemente simultan im Schlupf betrieben werden, wobei eine zur Erzeugung eines gewünschten Kriechmomentes erforderliche Gesamtreibleistung variabel auf die beiden Schaltelemente verteilt wird.

Bei einem Hybridfahrzeug, bei dem zwischen einem Verbrennungsmotor und einer Elektromaschine ein erstes reibschlüssiges Schaltelement und zwischen der Elektromaschine und einem Abtrieb ein zweites reibschlüssiges Schaltelement zur Verfügung stehen, ist durch eine gemeinsame Verwendung beider Reibelemente im Schlupf ein Dauerkriechbetrieb realisierbar, der einerseits ein gewünschtes Kriechmoment erzeugt und andererseits weder eines der beiden Schaltelemente übermäßig belastet noch eine kostenaufwendige größere Dimensionierung eines der beiden Schaltelemente erfordert oder eine erhöhte Inanspruchnahme der Elektromaschine bedingt.

Es können somit bei einem Kriechbetrieb des Hybridfahrzeugs über Reibkräfte zur Erzeugung eines gewünschten Kriechmomentes zwei rutschende Schaltelemente gemeinsam genutzt und das entstehende Reibmoment bedarfgerecht auf die beiden rutschenden Schaltelemente aufgeteilt werden. Dadurch wird ein nahezu unbegrenztes Dauerkriechen unter Umgehung einer Überhitzungsgefahr eines Schaltelements ermöglicht. Da auf eine wechselnde Ansteuerung der Schaltelemente verzichtet werden kann, ist die Steuerung und Regelung des Kriechbetriebes relativ einfach. Der Kriechbetrieb ist zudem besonders komfortabel, da Lastwechsel, verursacht durch ein Umschalten bzw. Hin- und Herschalten zwischen einzelnen Antriebskomponenten, entfallen.

Vor diesem Hintergrund liegt der Erfindung die Aufgabe zugrunde, ein Verfahren zur Steuerung eines Kriechbetrieb eines Fahrzeugs mit einem Hybridantrieb zu schaffen, das ein einfaches, effektives und bauteilschonendes Dauerkriechen, möglichst ohne zusätzlichen Konstruktions- und Kostenaufwand, ermöglicht, sowie die Erzeugung einer im Vergleich zum ersten Schaltelement kleinere Verlustleistung am zweiten Schaltelement sicherstellt.

Die Lösung dieser Aufgabe ergibt sich aus den Merkmalen des kennzeichnenden Teils des unabhängigen Patentanspruchs, während vorteilhafte Ausgestaltungen und Weiterbildungen der Erfindung den Unteransprüchen entnehmbar sind.

Die Verteilung der Gesamtreibleistung auf die beiden Schaltelemente gemäß der Erfindung erfolgt mittels einer Drehzahlregelung der Elektromaschine, über die mit Einzelreibmomenten korrelierte Verlustleistungen der Schaltelemente eingestellt werden, wobei die Elektromaschinendrehzahl in einem Drehzahlbereich zwischen einer Getriebeeingangsdrehzahl als ein unterer Grenzwert und einer Verbrennungsmotordrehzahl als ein oberer Grenzwert variiert wird.

Dabei wird die Elektromaschinendrehzahl zur Erzeugung einer im Vergleich zum zweiten Schaltelement kleineren Verlustleistung am ersten Schaltelement im Drehzahlbereich nahe der Verbrennungsmotordrehzahl und zur Erzeugung einer im Vergleich zum ersten Schaltelement kleineren Verlustleistung am zweiten Schaltelement im Drehzahlbereich nahe der Getriebeeingangsdrehzahl eingestellt.

Zur Durchführung des Verfahrens gemäß der Erfindung geeignet ist eine Vorrichtung zur Steuerung eines Kriechbetriebes eines Fahrzeuges mit einem Hybridantrieb, mit einem Parallelhybrid-Antriebsstrang, umfassend einen Verbrennungsmotor, wenigstens eine Elektromaschine, ein zwischen dem Verbrennungsmotor und der Elektromaschine angeordnetes, als Reibelement ausgebildetes, erstes Schaltelement, ein Getriebe, einen Abtrieb und ein zwischen der Elektromaschine und dem Abtrieb angeordnetes, als Reibelement ausgebildetes zweites Schaltelement. Zudem sind Steuerungsmittel zur Realisierung des Kriechbetriebes bei laufendem Verbrennungsmotor vorhanden, mittels denen beide Schaltelemente simultan im Schlupf betreibbar sind, wobei zur Erzeugung eines gewünschten Kriechmomentes eine Gesamtreibleistung variabel auf die beiden Schaltelemente aufteilbar ist.

Das zweite Schaltelement kann als eine zwischen der Elektromaschine und dem Getriebe angeordnete Reibkupplung ausgebildet sein. Alternativ dazu kann das zweite Schaltelement als eine getriebeinteme reibschlüssige Schaltkupplung oder reibschlüssige Schaltbremse ausgebildet sein. Dadurch kann gegebenenfalls eine externe zweite Kupplung entfallen, welches sich Bauraum sparend und kostengünstig auswirkt. Grundsätzlich sind auch mehrere getriebeinterne Kupplungen und/oder Bremsen, die in Zusammenwirkung als das zweite Schaltelement fungieren, möglich.

Die Vorrichtung kann in Kombination mit einem als Planetenrädergetriebe mit mehreren, beispielsweise drei, Planetenrädersätzen ausgebildeten Getriebe eingesetzt werden, wobei das zweite Schaltelement als eine von wenigstens zwei Schaltkupplungen oder als eine von wenigsten drei Schaltbremsen ausgebildet ist. Ein derartiges Getriebe und seine Funktionsweise sind dem Fachmann an sich bekannt. Beispielhaft sei dazu auf die DE 27 21 719 A1 und die EP 0 282 169 B1 verwiesen.

Zur Verdeutlichung im Hinblick auf die unterschiedlichen Ausführungsmöglichkeiten des zweiten Schaltelementes als getriebeextemes oder getriebeinternes Schaltelement sei zur Definition des Getriebeeingangs im Sinne der Erfindung angemerkt:

Unter einem Getriebeeingang wird eine mit der Abtriebsseite des zweiten Schaltelementes wirkverbundene Welle verstanden. Eine Getriebeeingangsdrehzahl ist dementsprechend die Drehzahl der mit der Abtriebsseite des zweiten Schaltelementes wirkverbundenen Welle. Bei einer dem Getriebe vorgelagerten separaten Reibkupplung als zweitem Schaltelement kann die Getriebeeingangsdrehzahl somit räumlich vor dem Getriebe abgegriffen werden. Bei einem getriebeinternen Reibelement als zweitem Schaltelement kann die Getriebeeingangszahl sekundärseitig des Schaltelementes, also innerhalb des Getriebes, erfasst werden.

Besonders vorteilhaft ist eine Aufteilung der Gesamtreibleistung auf die beiden Kupplungen, bei der beispielsweise eine jeweilige zughörige Kühlleistung berücksichtigt wird, so dass ein möglichst niedriges einheitliches kupplungsschonendes Temperaturniveau an beiden Kupplungen sichergestellt werden kann. Grundsätzlich können auch andere beziehungsweise weitere relevante vorgegebene Schaltelementspezifitäten, beispielsweise Kupplungsgröße, Art und Bauform der Reibpartner usw. oder daraus abgeleitete Größen der einzelnen Schaltelemente als Einstellkriterien herangezogen werden.

Möglich ist auch eine Temperaturüberwachung der Kupplungen und gegebenenfalls weiterer aktueller Betriebszustände oder daraus abgeleiteter Grö-βen, beispielsweise ein Verschleißzustand, eine Öltemperatur usw., so dass, je nach momentaner Kupplungstemperatur, bei einer ungleichen Kupplungserwärmung die Verteilung der Reibleistung erforderlichenfalls korrigiert werden kann.

Bei einer bevorzugten Ausführungsform des Verfahrens erfolgt die Durchführung eines Dauerkriechbetriebes zumindest in zwei folgenden Phasen:
a) Starten des Dauerkriechbetriebes durch Beschleunigung der Elektromaschine auf eine mittlere Elektromaschinendrehzahl in einen Drehzahlbereich zwischen Null und einer Leerlaufdrehzahl des Verbrennungsmotors, ausgehend von mit eingelegtem Gang bei zumindest offenem ersten Schaltelement und im Leerlauf laufendem Verbrennungsmotor stehenden Fahrzeug, und
b) Einregeln des Dauerkriechbetriebes durch Erzeugung eines gewünschten Kriechmomentes durch momentgeregelte Ansteuerung beider Schaltelemente im Schlupf und durch Aufteilung einer zur Erzeugung des gewünschten Kriechmomentes erforderlichen Gesamtreibleistung auf die beiden Schaltelemente über eine Einstellung einer Elektromaschinendrehzahl in einem Drehzahlbereich zwischen einer mit einer aktuellen Kriechgeschwindigkeit korrelierten Getriebeeingangsdrehzahl und einer aktuellen Verbrennungsmotordrehzahl.

Demnach wird zum Start des Kriechbetriebes, ausgehend von mit eingelegtem Gang stehendem Fahrzeug, zunächst die Elektromaschine auf eine Drehzahl mit genügend Abstand zwischen Null und der Leerlaufdrehzahl des Verbrennungsmotors beschleunigt sowie die beiden Kupplungen in Schlupf gebracht, so dass ein vorgegebenes gewünschtes Kriechmoment am Abtrieb erzeugt wird und das Fahrzeug zu kriechen beginnt. Im Kriechbetrieb wird das übertragene Drehmoment der verbrennungsmotorseitigen Kupplung im Schlupf gesteuert. Die Elektromaschine läuft drehzahlgeregelt mit einer Drehzahl zwischen einer Getriebeeingangsdrehzahl, die sich aus der aktuellen Kriechgeschwindigkeit und der eingelegten Übersetzung ergibt, und der Verbrennungsmotordrehzahl. Mit einer Variation der Elektromaschinendrehzahl wird die Verlustleistung an den Kupplungen, entsprechend deren Kühlleistungen, über die jeweilige Drehzahldifferenz der Reibpartner der Schaltelemente gezielt beeinflusst. Weiterhin wird das übertragene Drehmoment der abtriebsseitigen Kupplung oder gegebenenfalls Schaltbremse im Schlupf gesteuert. Im eingeschwungenen Kriechbetrieb, also wenn die Momentsteuerung der Kupplungen und die Drehzahlregelung der Elektromaschine aufeinander abgestimmt sind, wird somit ein stabiler Betriebspunkt des Fahrzeugantriebes beim Dauerkriechen eingeregelt.

Zur Verdeutlichung der Erfindung ist der Beschreibung eine Zeichnung eines Ausführungsbeispiels beigefügt. In dieser zeigt
- Fig. 1: eine schematische Darstellung eines Hybridantriebes eines Fahrzeugs zur Durchführung eines erfindungsgemäßen Verfahrens zur Steuerung eines Kriechbetriebs, und
- Fig. 2: ein Drehzahldiagramm zur Reibleistungsverteilung auf zwei Kupplungen bei dem Kriechbetrieb.

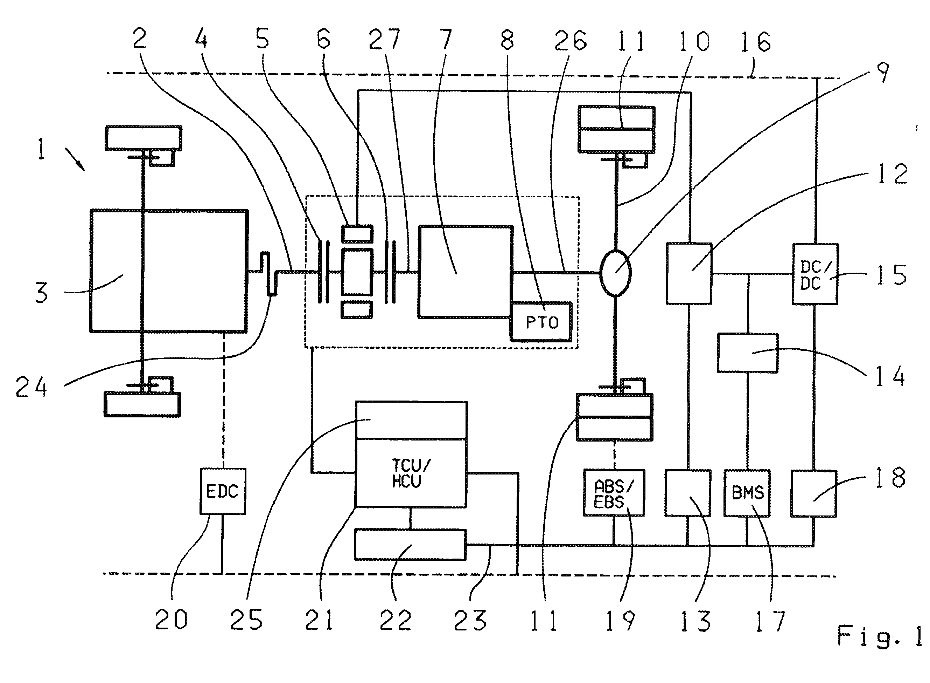

Demnach ist in Fig. 1 ein Schema eines Fahrzeug-Hybridantriebs 1 mit einem Parallelhybrid - Antriebsstrang 2 dargestellt, wie er beispielsweise für ein Nutzfahrzeug (Lkw, Bus, Sonderfahrzeug) vorgesehen sein kann. Der Antriebsstrang 2 weist einen Verbrennungsmotor 3, beispielsweise einen Dieselmotor, mit einer Kurbelwelle 24 auf, die mittels einer als Reibkupplung ausgebildetes erstes Schaltelement 4 mit einer Elektromaschine 5 verbindbar ist. Die Elektromaschine 5 ist wiederum über ein zweites als Reibkupplung ausgebildetes Schaltelement 6 mit einem Getriebeeingang 27 des Getriebes 7 koppelbar. Die Funktion des zweiten Schaltelementes 6 kann, wie bereits eingangs erläutert, auch durch (nicht dargestellte) getriebeinteme Kupplungselemente, insbesondere eine oder mehrere Schaltkupplungen und/oder Schaltbremsen eines entsprechend ausgebildeten Getriebes, beispielsweise eines dreigliedrigen Planetenrädergetriebes, übernommen werden. Dem Getriebe 7 kann, wie in Fig. 1 angedeutet, ein nicht näher erläuterter Nebenabtrieb (PTO: Power Take-Off) 8 antriebstechnisch nachgeordnet sein. Über einen Abtrieb 26 und ein Differenzial 9 kann ein jeweils anliegendes Abtriebsmoment des Hybridantriebes 1 an eine Antriebsachse 10 und über diese an die Antriebsräder 11 weitergeleitet werden.

Die Elektromaschine 5 kann, je nach Betriebssituation, als elektrisches Antriebsaggregat oder als Generator betrieben werden. Dazu ist sie mit einem Umrichter 12 verbunden, der von einem Umrichter-Steuergerät 13 ansteuerbar ist. Mittels des Umrichters 12 ist die Elektromaschine 5 mit einem elektrischen Antriebsenergiespeicher 14, beispielsweise einer 340V-Hochvolt-Batterie (auch Supercaps sind möglich), verbunden. Im motorischen Betrieb wird die Elektromaschine 5 vom Energiespeicher 14 gespeist. Im generatorischen Betrieb, also bei Antrieb mittels des Verbrennungsmotors 3 und/oder im Rekuperationsbetrieb, wird der Energiespeicher 14 von der Elektromaschine 5 aufgeladen. Weiterhin fungiert die Elektromaschine 5 als integrierter Startergenerator (ISG) zum Starten des Verbrennungsmotors 3. Der Hochvoltkreis des Energiespeichers 14 beziehungsweise die daran angeschlossenen Steuergeräte sind über einen bidirektionalen Gleichspannungswandler (DC/DC) 15 an ein Bordnetz (24V oder 12V) 16 angeschlossen. Der Energiespeicher 14 ist von einem Batteriemanagementsystem (BMS) 17 bezüglich seines Ladezustandes (SOC: State of Charge) überwachbar und regelbar. Der Gleichspannungswandler 15 ist von einem Gleichspannungswandler-Steuergerät 18 ansteuerbar. Zudem ist ein Steuergerät 19 für nicht näher erläuterte Bremsregelungsfunktionen, insbesondere ein Antiblockiersystem (ABS) beziehungsweise ein elektronisches Bremssystem (EBS) sowie ein weiteres Steuergerät 20 für eine elektronische Dieselregelung (EDC) des beispielhaft als Dieselmotor ausgebildeten Verbrennungsmotors 3 vorgesehen. Die einzelnen genannten Steuergeräte können auch, wenigstens zum Teil, in einem Steuergerät zusammengefasst sein.

Weiterhin ist eine integrierte Steuerungseinrichtung 21 vorhanden, in der ein Getriebesteuergerät (TCU: Transmission Control Unit), ein Hybridsteuergerät (HCU: Hybrid Control Unit) sowie verschiedene Betriebsfunktionen in Form von elektronischen Steuerungs- und/oder Regelungsprogrammen zusammengefasst sind. Der Steuerungseinrichtung 21 sind erfindungsgemäß Steuerungsmittel 25 zur Ansteuerung der Schaltelemente 4 und 6 für deren Schlupfbetrieb zugeordnet. Die Steuerungsmittel 25 ist dazu derart ausgebildet, dass sie mit der Steuerungseinrichtung 21, die auch den Betrieb der Elektromaschine 5 regelt, bei der Regelung eines erfindungsgemäßen Kriechbetriebes mit beiden Schaltelementen 4, 6 im Schlupf und einer Drehzahlregelung der Elektromaschine 5 zusammenwirkt. Zur Steuerung und Umschaltung der möglichen Antriebsmodi des Hybridantriebes 1 ist eine zentrale Strategie-Einheit 22 vorgesehen, die, vorteilhaft über einen Datenbus (z.B. CAN) 23, mit der Steuerungseinrichtung 21 und der Steuereinheit 25 sowie den weiteren relevanten Steuergeräten 13, 17, 18, 19 verbunden ist.

Ein erfindungsgemäßes Verfahren zur Realisierung eines Kriechbetriebes, welches mit dem Hybridantrieb 1 besonders effektiv durchführbar ist, beruht darauf, beide Schaltelemente 4, 6 simultan im Schlupf zu betreiben. Zunächst befindet sich das Fahrzeug bei mit Leertaufdrehzahi laufendem Verbrennungsmotor 3 im Stillstand. Die verbrennungsmotorseitige Reibkupplung 4 ist geöffnet, so dass der Verbrennungsmotor 3 vom Antriebsstrang 2 entkoppelt ist. Die Drehzahl der Elektromaschine 5 ist Null. Im Getriebe 7 ist ein Anfahrgang eingelegt. Die Elektromaschine 5 wird zum Starten des Kriechens des Fahrzeugs auf eine von der Leerlaufdrehzahl beabstandete Drehzahl beschleunigt. Das zweite Schaltelement 6 kann ebenfalls zunächst geöffnet sein oder wird von Beginn an, vorzugsweise schlupfend, mit beschleunigt. Nach der Startphase werden beide Reibkupplungen 4, 6 im Schlupf gesteuert betrieben, so dass am Abtrieb 26 ein gewünschtes Kriechmoment erzeugt wird und sich das Fahrzeug der Getriebeübersetzung entsprechend mit einer Kriechgeschwindigkeit bewegt.

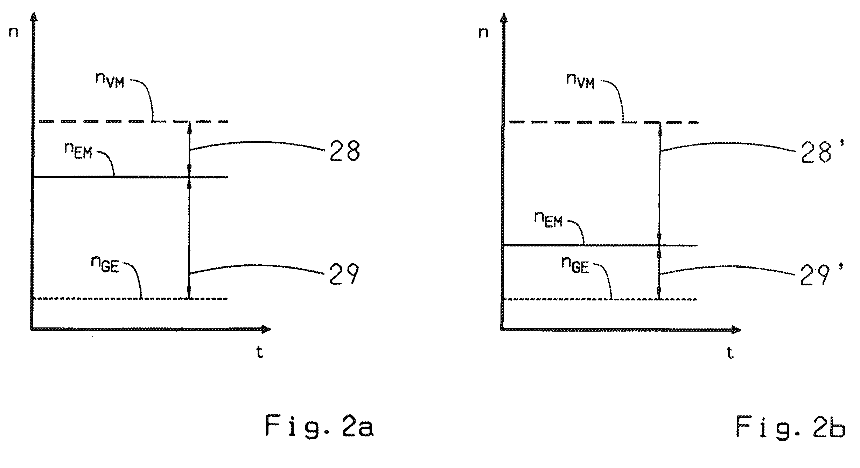

Eine mit dem erzeugten Kriechmoment korreliert Gesamtreibleistung beider Kupplungen 4, 6 kann mittels einer Drehzahlregelung der Elektromaschine 5 auf die beiden Kupplungen 4, 6 verteilt werden. Dazu zeigt Fig. 2 ein vereinfachtes Drehzahldiagramm mit Drehzahlen des Verbrennungsmotors 3, der Elektromaschine 5 und des Getriebeeingangs 7. In der in Fig. 2a gezeigten Betriebsvariante ist die Elektromaschinendrehzahl n_{EM} nahe der Verbrennungsmotordrehzahl n_{VM} eingeregelt. Ein Drehzahlabstand 28 zwischen der Drehzahl des Verbrennungsmotors 3 und der Elektromaschine 5 ist somit geringer als ein Drehzahlabstand 29 zwischen der Drehzahl der Elektromaschine 5 und der Drehzahl des Getriebeeingangs 27. Umgekehrt ist bei der in Fig. 2b gezeigten Betriebsvariante die Elektromaschinendrehzahl n_{EM} nahe der Getriebeeingangsdrehzahl n_{GE} eingeregelt. Ein Drehzahlabstand 29' zwischen der Drehzahl der Elektromaschine 5 und der Drehzahl des Getriebeeingangs 27 ist somit geringer als ein Drehzahlabstand 28' zwischen der Drehzahl der Elektromaschine 5 und der Drehzahl des Verbrennungsmotors 3.

Aus dem den Drehzahldifferenzen 28, 29 bzw. 28', 29' entsprechenden jeweiligen Schlupf resultieren unterschiedliche Verlustleistungen durch den Reibenergieeintrag an den beiden Kupplungen 4, 6. Im praktischen Kriechbetrieb wird die Verlustleistung an den beiden Kupplungen 4 und 6 entsprechend deren gegebenen Kühlleistungen mittels einer Drehzahlregelung der Elektromaschine 5 so eingestellt, dass sich an beiden Kupplungen 4, 6 eine möglichst geringe Kupplungserhitzung ergibt, so dass der Kriechbetrieb ohne die Gefahr einer Kupplungsschädigung dauerhaft aufrechterhalten werden kann.

### Bezugszeichenliste

- 1: Hybridantrieb
- 2: Antriebsstrang
- 3: Verbrennungsmotor
- 4: Erstes Schaltelement
- 5: Elektromaschine
- 6: Zweites Schaltelement
- 7: Getriebe
- 8: Nebenabtrieb
- 9: Differenzial
- 10: Antriebsachse
- 11: Fahrzeugrad
- 12: Umrichter
- 13: Umrichter-Steuergerät
- 14: Elektrischer Antriebsenergiespeicher
- 15: Gleichspannungswandler
- 16: Bordnetz
- 17: Batteriemanagementsystem
- 18: Spannungswandler-Steuergerät
- 19: Elektronische Bremsregelung
- 20: Elektronische Dieselregelung
- 21: Steuerungseinrichtung
- 22: Betriebsstrategie-Einheit
- 23: Datenbus
- 24: Kurbelwelle
- 25: Steuerungsmittel
- 26: Abtrieb
- 27: Getriebeeingang
- 28, 28': Drehzahlabstand
- 29, 29': Drehzahlabstand
- ABS: Antiblockiersystem
- BMS: Batterie-Management-System
- DC/DC: Gleichspannungswandler (Direct Current/Direct Current)
- EBS: Elektronisches Bremssystem (Electronic Brake System)
- EDC: Elektronische Dieselregelung (Electronic Diesel Control)
- HCU: Hybridsteuerung (Hybrid Control Unit)
- TCU: Getriebesteuerung (Transmission Control Unit)
- PTO: Nebenabtrieb (Power Take-Off)
- n: Drehzahl
- n_{EM}: Drehzahl der Elektromaschine
- n_{GE}: Drehzahl des Getriebeeingangs
- n_{VM}: Drehzahl des Verbrennungsmotors
- t: Zeit

## Patentansprüche

1. Verfahren zur Steuerung eines Kriechbetriebes eines Fahrzeugs mit einem Hybridantrieb (1) mit einem Parallelhybrid-Antriebsstrang (2), umfassend einen Verbrennungsmotor (3), wenigstens eine Elektromaschine (5), ein zwischen dem Verbrennungsmotor (3) und der Elektromaschine (5) angeordnetes, als Reibelement ausgebildetes erstes Schaltelement (4), ein Getriebe (7), einen Abtrieb (26) und ein zwischen der Elektromaschine (5) und dem Abtrieb (26) angeordnetes, als Reibelement ausgebildetes zweites Schaltelement (6), wobei zur Realisierung des Kriechbetriebes bei laufendem Verbrennungsmotor (3) beide Schaltelemente (4, 6) simultan im Schlupf betrieben werden, wobei eine zur Erzeugung eines gewünschten Kriechmomentes erforderliche Gesamtreibleistung variabel auf die beiden Schaltelemente (4, 6) verteilt wird, **dadurch gekennzeichnet, dass**
die Verteilung der Gesamtreibleistung auf die beiden Schaltelemente (4, 6) mittels einer Drehzahlregelung der Elektromaschine (5) erfolgt, mittels der mit Einzelreibmomenten korrelierte Verlustleistungen der Schaltelemente (4, 6) eingestellt werden, wobei die Elektromaschinendrehzahl (n_{EM}) in einem Drehzahlbereich zwischen einer Getriebeeingangsdrehzahl (n_{GE}) als ein unterer Grenzwert und einer Verbrennungsmotordrehzahl (n_{VM}) als ein oberer Grenzwert variiert wird.

2. Verfahren nach Anspruch 1, **dadurch gekennzeichnet, dass** die Elektromaschinendrehzahl (n_{EM}) zur Erzeugung einer im Vergleich zum zweiten Schaltelement (6) kleineren Verlustleistung am ersten Schaltelement (4) im Drehzahlbereich nahe der Verbrennungsmotordrehzahl (n_{VM}) und zur Erzeugung einer im Vergleich zum ersten Schaltelement (4) kleineren Verlustleistung am zweiten Schaltelement (6) im Drehzahlbereich nahe der Getriebeeingangsdrehzahl (n_{EM}) eingestellt wird.

3. Verfahren nach Anspruch 1 oder 2, **dadurch gekennzeichnet, dass** bei der Aufteilung der Gesamtreibleistung auf die beiden Schaltelemente (4, 6) eine jeweilige zughörige Kühlleistung und/oder andere relevante vorgegebene Schaltelementspezifitäten oder daraus abgeleitete Größen der einzelnen Schaltelemente (4, 6) berücksichtigt werden.

4. Verfahren nach einem der Ansprüche 1 bis 3, **dadurch gekennzeichnet, dass** bei der Aufteilung der Gesamtreibleistung auf die beiden Schaltelemente (4, 6) eine momentane Kupplungstemperatur und/oder andere aktuelle Betriebszustände oder daraus abgeleitete Größen der einzelnen Schaltelemente (4, 6) berücksichtigt werden.

5. Verfahren nach einem der Ansprüche 1 bis 4, **dadurch gekennzeichnet, dass** zur Durchführung eines Dauerkriechbetriebes wenigstens folgende Schritte vorgesehen sind:
a) Starten des Dauerkriechbetriebes durch Beschleunigung der Elektromaschine (5) auf eine mittlere Elektromaschinendrehzahl (n_{EM}) in einen Drehzahlbereich zwischen Null und einer Leerlaufdrehzahl des Verbrennungsmotors (3), ausgehend von mit eingelegtem Gang bei zumindest offenem ersten Schaltelement (4) und im Leerlauf laufendem Verbrennungsmotor (3) stehenden Fahrzeug,
b) Einregeln des Dauerkriechbetriebes durch:
- Erzeugung eines gewünschten Kriechmomentes durch momentgeregelte Ansteuerung beider Schaltelemente (4, 6) im Schlupf, und
- Aufteilung einer zur Erzeugung des gewünschten Kriechmomentes erforderlichen Gesamtreibleistung auf die beiden Schaltelemente (4, 6) durch Einstellung einer Elektromaschinendrehzahl (n_{EM}) in einem Drehzahlbereich zwischen einer mit einer aktuellen Kriechgeschwindigkeit korrelierten Getriebeeingangsdrehzahl und einer aktuellen Verbrennungsmotordrehzahl.

## Claims

1. Method for controlling a creeping operation of a vehicle having a hybrid drive (1) with a parallel hybrid drive train (2), comprising an internal combustion engine (3), at least one electrical machine (5), a first switching element (4) which is arranged between the internal combustion engine (3) and the electrical machine (5) and is in the form of a friction element, a transmission (7), an output drive (26) and a second switching element (6) which is arranged between the electrical machine (5) and the output drive (26) and is in the form of a friction element, with the two switching elements (4, 6) being simultaneously operated with slip in order to realize the creeping operation when the internal combustion engine (3) is running, with a total frictional power which is required to generate a desired creeping torque being variably distributed between the two switching elements (4, 6), **characterized in that** the total frictional power is distributed between the two switching elements (4, 6) by means of rotation speed control of the electrical machine (5), power losses from the switching elements (4, 6) which are correlated with individual frictional torques being set by means of the said rotation speed control, with the electrical machine rotation speed (n_{EM}) being varied in a rotation speed range between a transmission input rotation speed (n_{GE}) as a lower limit value and an internal combustion engine rotation speed (n_{VM}) as an upper limit value.

2. Method according to Claim 1, **characterized in that** the electrical machine rotation speed (n_{EM}) is set in order to generate a power loss at the first switching element (4) in the rotation speed range close to the internal combustion engine rotation speed (n_{VM}), which power loss is smaller than at the second switching element (6), and in order to generate a power loss at the second switching element (6) in the rotation speed range close to the transmission input rotation speed (n_{GE}), which power loss is smaller than at the first switching element (4).

3. Method according to Claim 1 or 2, **characterized in that** a respective associated cooling power and/or other relevant predefined switching element-specific features or variables of the individual switching elements (4, 6) which are derived therefrom are taken into consideration when the total frictional power is divided between the two switching elements (4, 6).

4. Method according to one of Claims 1 to 3, **characterized in that** an instantaneous clutch temperature and/or other actual operating states or variables of the individual switching elements (4, 6) which are derived therefrom are taken into consideration when the total frictional power is divided between the two switching elements (4, 6).

5. Method according to one of Claims 1 to 4, **characterized in that** at least the following steps are provided in order to carry out a long-term creeping operation:
a) the long-term creeping operation is started by accelerating the electrical machine (5) to an average electrical machine rotation speed (n_{EM}) in a rotation speed range between zero and an idling rotation speed of the internal combustion engine (3) starting from a vehicle with a selected gear with an at least open first switching element (4) and the internal combustion engine (3) running in the idling mode,
b) adjusting the long-term creeping operation by:
- generating a desired creeping torque by torque-controlled actuation of the two switching elements (4, 6) with slip, and
- dividing a total frictional power, which is required in order to generate the desired creeping torque, between the two switching elements (4, 6) by setting an electrical machine rotation speed (n_{EM}) in a rotation speed range between a transmission input rotation speed, which is correlated with an actual creeping speed, and an actual internal combustion engine rotation speed.

## Revendications

1. Procédé de commande d'un fonctionnement en vitesse lente d'un véhicule muni d'une propulsion hybride (1) avec une chaîne motrice hybride parallèle (2), comprenant un moteur à combustion interne (3), au moins une machine électrique (5), un premier élément de commutation (4) réalisé sous la forme d'un élément de friction, disposé entre le moteur à combustion interne (3) et la machine électrique (5), une boîte de vitesses (7), une prise de force (26) et un deuxième élément de commutation (6) réalisé sous la forme d'un élément de friction, disposé entre la machine électrique (5) et la prise de force (26), les deux éléments de commutation (4, 6) étant utilisés simultanément en patinage pour réaliser le fonctionnement en vitesse lente lorsque le moteur à combustion interne (3) est en marche, une puissance motrice totale nécessaire pour générer un moment de vitesse lente souhaité étant distribuée de manière variable sur les deux éléments de commutation (4, 6), **caractérisé en ce que**
la distribution de la puissance motrice totale sur les deux éléments de commutation (4, 6) est effectuée au moyen d'une régulation de la vitesse de rotation de la machine électrique (5), à l'aide de laquelle sont réglées les pertes de puissance corrélées avec les moments de friction individuels des éléments de commutation (4, 6), la vitesse de rotation de la machine électrique (n_{EM}) variant dans une plage de vitesses de rotation entre une vitesse de rotation d'entrée de boîte de vitesses (n_{GE}) comme valeur limite inférieure et une vitesse de rotation du moteur à combustion interne (n_{VM}) comme valeur limite supérieure.

2. Procédé selon la revendication 1, **caractérisé en ce que** la vitesse de rotation de la machine électrique (n_{EM}) est réglée pour produire au niveau du premier élément de commutation (4) une perte de puissance inférieure en comparaison du deuxième élément de commutation (6) dans la plage de vitesses de rotation proche de la vitesse de rotation du moteur à combustion interne (n_{VM}) et pour produire au niveau du deuxième élément de commutation (6) une perte de puissance inférieure en comparaison du premier élément de commutation (4) dans la plage de vitesses de rotation proche de la vitesse de rotation d'entrée de boîte de vitesses (n_{GE}) -

3. Procédé selon la revendication 1 ou 2, **caractérisé en ce que** lors de la distribution de la puissance motrice totale sur les deux éléments de commutation (4, 6), il est tenu compte d'une capacité de refroidissement associée respective et/ou d'autres spécificités prédéfinies pertinentes des éléments de commutation, ou de grandeurs qui en sont dérivées, des éléments de commutation (4, 6) individuels.

4. Procédé selon l'une des revendications 1 à 3, **caractérisé en ce que** lors de la distribution de la puissance motrice totale sur les deux éléments de commutation (4, 6), il est tenu compte d'une température momentanée de l'accouplement et/ou d'autres états opérationnels actuels, ou de grandeurs qui en sont dérivées, des éléments de commutation (4, 6) individuels.

5. Procédé selon l'une des revendications 1 à 4, **caractérisé en ce qu'**au moins les étapes suivantes sont prévues pour mettre en oeuvre le fonctionnement en vitesse lente :
a) démarrage du fonctionnement en vitesse lente en accélérant la machine électrique (5) jusqu'à une vitesse de rotation de machine électrique (n_{EM}) moyenne dans une plage de vitesses de rotation entre zéro et une vitesse de rotation de ralenti du moteur à combustion interne (3), en partant d'un véhicule immobile avec un rapport engagé et au moins le premier élément de commutation (4) ouvert et un moteur à combustion interne (3) qui tourne au ralenti,
b) asservissement du fonctionnement en vitesse lente par :
- génération d'un moment de vitesse lente souhaité par commande à régulation du moment des deux éléments de commutation (4, 6) en patinage, et
- distribution d'une puissance motrice totale nécessaire pour générer le moment de vitesse lente souhaité sur les deux éléments de commutation (4, 6) en réglant une vitesse de rotation de machine électrique (n_{EM}) dans une plage de vitesses de rotation entre une vitesse de rotation d'entrée de boîte de vitesses corrélée avec une vitesse lente actuelle et une vitesse de rotation actuelle du moteur à combustion interne.
